# EUROPEAN PATENT SPECIFICATION

(11) **EP 0 866 959 B1**
(45) Date of publication and mention of the grant of the patent: **19.01.2000**
(21) Application number: 96940969.7
(22) Date of filing: 16.12.1996
(51) Int. Cl.: F16K 11/22, F16K 27/00, G01L 19/00

(54) **MULTIPLE VALVE MANIFOLD FOR USE WITH A PRESSURE PROCESSING APPARATUS**
ANSCHLUSSBLOCK FÜR MEHRERE VENTILE ZUR ANWENDUNG MIT EINEM DRUCKVERARBEITENDEN GERÄT
COLLECTEUR A SOUPAPES MULTIPLES DESTINE A UN DISPOSITIF DE TRAITEMENT DE MESURES DE PRESSION

(30) Priority: 15.12.1995 US 8692 P
(43) Date of publication of application: 30.09.1998
(73) Proprietor: Hutton, Peter B., Calgary, Alberta T2E 6Z5 (CA)
(72) Inventor: Hutton, Peter B., Calgary, Alberta T2E 6Z5 (CA)
(74) Representative: Fuchs Mehler Weiss & Fritzsche
(86) International application number: CA9600842
(87) International publication number: WO9722867

(56) References cited:
- WO-A-96/18091
- GB-A- 2 086 535
- US-A- 5 036 884
- US-A- 5 277 224
- MACHINE DESIGN, vol. 53, no. 9, April 1981, pages 73-76, XP002027359 RICHARD C. BEERCHECK: "HYDRAULIC MANIFOLDS"

## Description

### Background of the Invention.

The present invention relates to valve manifolds as described in the preamble of Claim 1.

Pressure transmitters serve the purpose of monitoring variables of a process fluid flow in a pipeline. A pressure transmitter has a first and a second process fluid inlet. In operation, each of the two inlets communicates, with a separate point in a process fluid pipeline. The pressure transmitter typically transmits pressure values or differentials at the two points. The transmitted values are then used in extrapolating various conditions prevailing in the pipeline. One example of an operative arrangement of a pressure transmitter is shown in U.S.P. 4,466,290 (Frick) issued August 21, 1984 and in other prior art referred to hereafter.

In pipeline systems, there is often a limited space around a pressure transmitter. Different spacing between the centers of process fluid source outlets at the pressure transmitter has to be accommodated with a minimum points of potential leaks. For this reason, pressure transmitters have lately been mounted directly on a valve manifold. Valve manifolds of this type are solid blocks provided with a number, usually three or five, valves. The valves control the passage through the block from a process or cleaning fluid source to the transmitter and/or to a vent discharge. The block is interposed between the pressure transmitter and the process fluid source.

The limited space available around a pressure transmitter resulted in attempts to reduce the size of the manifold such that the manifold and the valves mounted in the manifold require as little space as possible while allowing safe and convenient manual operation of the valves in manipulating the flow of process or cleaning fluid through the manifold.

US Patent 5,277,224, issued January 11, 1994 (Hutton et al.) presents an example of a manifold where the space required for the operation of the manifold is reduced. However, viewed from the standpoint of the present invention, there is still a part of the manifold which projects sidewise beyond the a periphery defined by mounting holes which typically are adapted to register with mounting holes or bolts of an associated pressure transmitter.

Examples of further prior art references showing the state of the art include, for instance, US Patent 3,596,680 (Adams), issued August 3, 1971; US Patent 3,756,274 (Wolfgramm), issued September 4, 1973. Patent 1,797,591 (Sartakoff) issued March 24, 1931 and other references.

It is an object of the present invention to further advance the art of manifolds for the purpose described and to provide a manifold which would allow safe operation of a multiple valve manifold, where the space required for operation of the valves is further reduced and where the overall arrangement of passageways within the manifold block is simplified to reduce production costs.

The object is met by the characterizing features of claim 1 and by the features of claims 2 to 12. In particular, the features of characterizing clause of claims 1 - 9, 11 and 12 enhance the space saving advantage while that of claim 10 provides an improvment in facilitating the manufacture.

The invention will be described by way of two preferred exemplary embodiments, with reference to the accompanying simplified, diagrammatic, not-to-scale drawings. The drawings show:
- Fig. 1: a top and front perspective view showing a first embodiment of the manifold block including the invention;
- Fig. 2: a bottom and rear perspective view of the manifold block of Fig. 1;
- Fig. 3: a top view of the manifold according to Fig. 1;
- Fig. 4: a front view thereof;
- Fig. 5: a bottom view thereof;
- Fig. 6: section VI-VI of Fig. 4;
- Fig. 7: section VII-VII of Fig. 4;
- Fig. 8: section VIII-VIII of Fig. 4;
- Fig. 9: section IX-IX of Fig. 5;
- Fig. 10: section X-X of Fig. 5;
- Fig. 11: section XI-XI of Fig. 5;
- Fig. 12: a top and front perspective view showing a second embodiment of the manifold block including the invention;
- Fig. 13: a bottom and rear perspective view of the manifold block of Fig. 12;
- Fig. 14: a top plan view of the manifold shown in Fig. 12;
- Fig. 15: a front view thereof;
- Fig. 16: a bottom plan view thereof
- Fig. 17: section XVII - XVII of Fig. 15
- Fig. 18: section XVIII-XVIII of Fig. 15
- Fig. 19: section XIX-XIX of Fig. 16
- Fig. 20: section XX-XX of Fig. 16
- Fig. 21: (on the sheet of Fig. 17) the right hand side view of the representation of Fig. 15, the left hand side view thereof being identical;
- Fig. 22: an enlarged partial view on section line XXII - XXII of Fig. 4 but showing vent valves installed in the block; and
- Fig. 23: an enlarged partial view on section line VI - VI of Fig. 4 but showing an equalizer valve installed in the block.

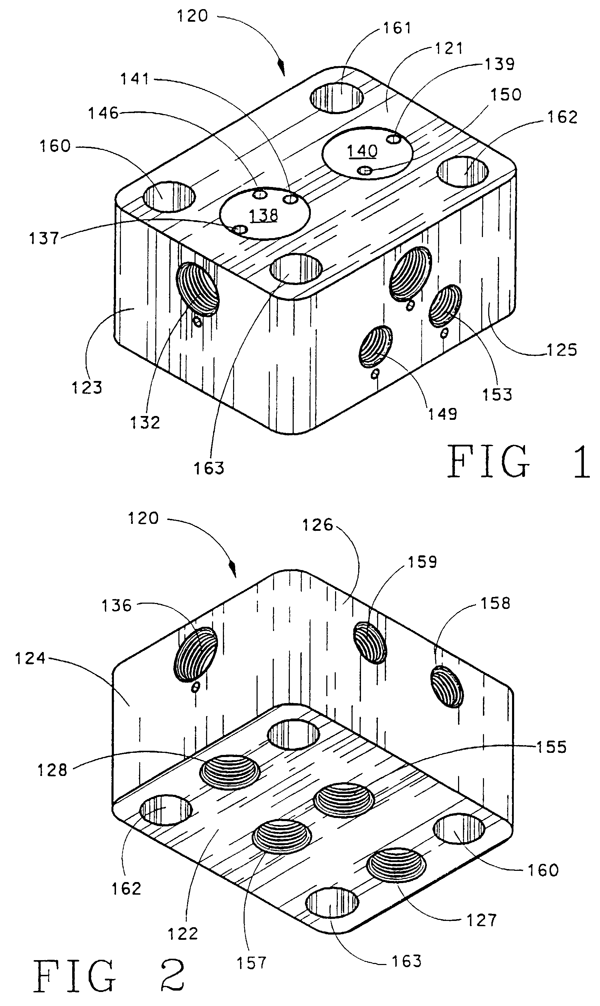

Referring firstly to the embodiment shown in Figs. 1 - 11, The manifold has a body of the type of a solid block **120** made - in the embodiment shown - from stainless steel, it being understood that the choice of material is optional and depends on a particular application. The block has the shape of a rectangular prism and includes opposed top and bottom walls or first and second face sections **121**, **122**, a first side wall **123**, a second side wall **124** a front wall **125** and a rear wall **126**. The walls 123-126 are also referred to as "peripheral walls" as they enclose the periphery of the block 120 and are generally referred to as "a peripheral section."

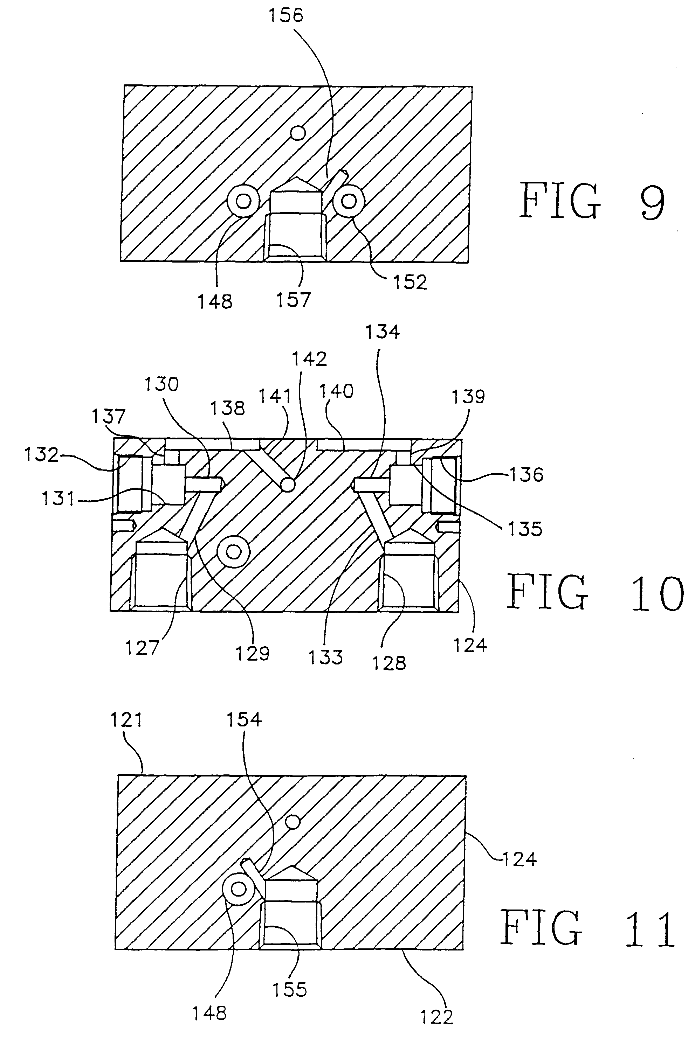

Machined in the second face section 122 is a process fluid first inlet port **127** and a process fluid second inlet port **128**. The first inlet 127 communicates, via an upwardly and inwardly inclined first process passage **129** (Fig. 10) with a short horizontal branch **130** which defines a coaxial, inwards directed extension of a first block valve chamber **131** co-axial with a threaded first block valve opening **132**. The threaded opening 132 in effect forms a threaded outer portion of a block valve mounting bore comprised of the valve chamber 131 and the opening 132. Each valve chamber of the block defines a valve seat as will be described.

The remaining valve mounting bores described throughout this specification have the same functional arrangement.

The second inlet port 128 likewise communicates, via an upwardly and inwardly inclined second process passage **133** with a short horizontal branch **134** which defines a coaxial, inwards directed extension of a valve chamber **135** co-axial with a second block valve bore opening **136**.

The transition between the horizontal branch 130 at its inlet into the valve chamber 131 defines a valve seat co-operating with a valve member (not shown) for selectively blocking the entrance of pressurized process fluid into the valve chamber 131. Similarly, the transition between the branch 134 at its inlet into the valve chamber 135 defines a valve seat co-operating with a valve member (not shown) for selectively blocking the entrance of second pressurized process fluid into the valve chamber 135.

The valve chamber 131 permanently communicates through a short first radial conduit **137** with a first instrument cavity **138**. Similarly, the valve chamber 135 communicates via a short second radial conduit **139** with a second instrument cavity **140**.

The cavity 138 is also in permanent communication with an inlet of an oblique conduit **141** which slopes in the direction from the top wall toward the bottom wall 122 and obliquely toward the second side wall 124, as best seen from Fig. 10. The outlet of the conduit 141, in turn, permanently communicates with a coaxial extension conduit **142** of the equalizer valve chamber **143** which, in turn, is coaxial with the threaded outer part **144** of the equalizer valve bore. The cavity 140 permanently communicates, through a vertical conduit 150 and an oblique conduit **145**, with the equalizer valve chamber 143.

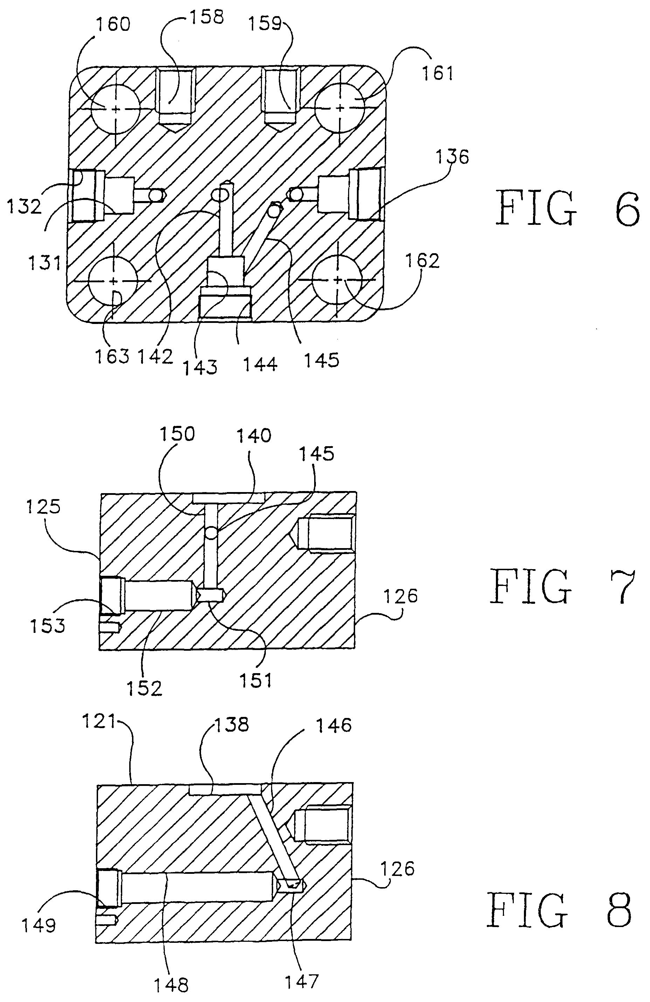

The general structure of the equalizer valve chamber 143 is similar to what has been described above. That is to say, the transition between the valve chamber 143 and the extension conduit 142 defines a valve seat for a valve member of a valve (not shown) normally threadably secured at the bore 144. It will be thus appreciated that with the equalizer valve open, the valve chamber 143 Fig. 6 and the extension conduit 142, and thus the two cavities 138, 140, are in a fluid communication to equalize the pressure in the cavities 138, 140.

The cavity 138 further communicates, through an oblique conduit **146** which slopes from the top wall 121 to the bottom wall 122 and obliquely in the direction toward the rear wall 126 (Fig. 8), with an extension conduit **147** coaxial with a cylindric first vent valve chamber **148** which, in turn, is coaxial with a threaded valve bore **149** of a first vent valve.

As mentioned above, the conduit **150** connects the cavity 140 with the oblique conduit 145 and thus with the equalizer valve chamber 143. Fig. 7 shows that the lower portion of the vertical conduit 150 also connects the cavity 140 with a short extension conduit **151** forming a coaxial extension of a cylindric second vent valve chamber **152** which, in turn, is coaxial with a threaded part **153** of the valve mounting bore 153-152 of a second vent valve.

Despite certain structural differences to be discussed later, the vent valve chambers 148 and 152 and their extension conduits 147, 151 are arranged similar to the remaining valve chambers in that there is a valve seat at the inlet of each extension conduit 147, 151 into its associated valve chamber 148, 152. The seat is compatible with a closing member the structure of which will be described later.

The end of the first vent valve chamber 148 remote from the associated first valve threaded bore 149 communicates with an inlet port of a transverse conduit **154** Fig. 11. As best seen from Fig. 5, the inlet port of the conduit 154 is located in the side wall of the valve chamber 148, near the valve seat of the chamber 148. The downstream end of the transverse conduit 154 is in a permanent communication with a first vent outlet **155** (Fig. 11). The end of the shorter, second vent valve chamber 152 near its valve seat is similarly in a permanent communication with an inlet port (Fig. 9) of a second transverse conduit **156** and through it with a second vent outlet **157**.

The vent outlets 155, 157 are adapted to become connected to a suitable discharge conduits exterior to the body of the manifold and not forming a part of the invention.

There are two threaded bores 158, 159 in the rear wall 126. They serve the purpose of securing the body 120 to a bracket. Furthermore, four mounting holes 160 - 163 are provided for bolts securing a complementary pressure transmitter to the top face 121 of the body 120, in a sealing engagement with the cavities 138, 140.

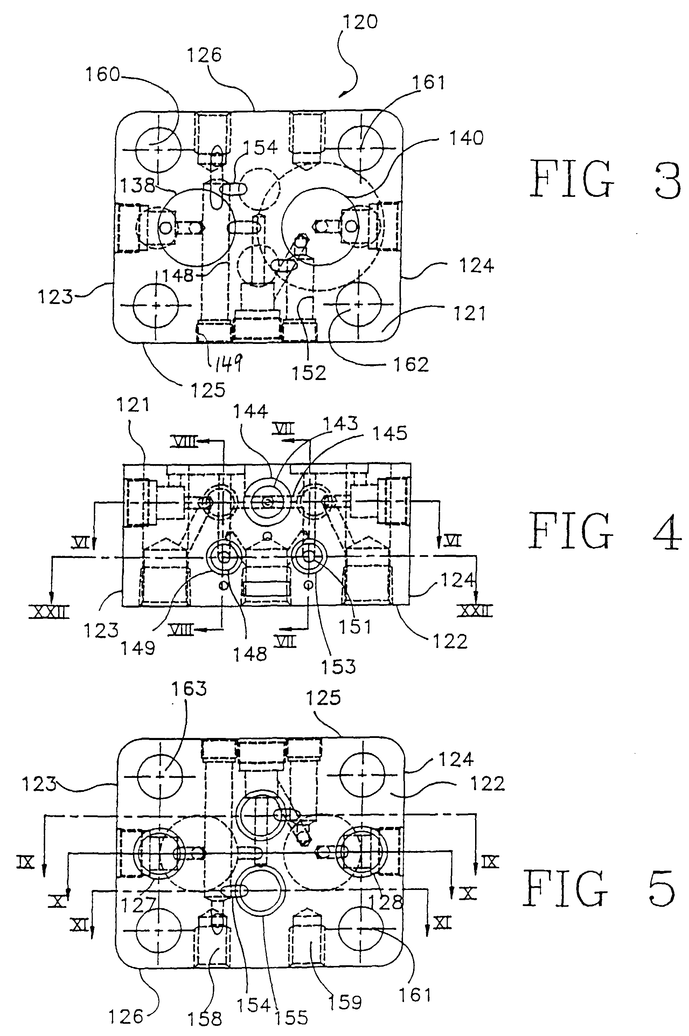

One of the features of the present invention is seen from Figs. 3, 5 and 6. In particular, apart from the relatively small thickness as measured between the upper and lower faces 121, 122, those figures show that there are four mounting holes **160** - **163** disposed about the periphery of the block 120. The axes of the holes 160 - 163 are perpendicular to the first face section 121. Also, it can be appreciated that the axes of the holes 160 - 163 coincide with sides of a reference prism. In the embodiment shown, the reference prism is a four-sided prism where the axes actually define each a joinder or corner between two adjacent sides. The number of the mounting holes is optional and is usually given by the disposition of mounting holes on a flange of a pressure transmitter or the like instrument to be used with the block 120. However, even if the number of the mounting holes is more than as shown, the arrangement is such that at least some of the axes of the mounting holes define corners of the reference prism.

Both embodiments of the block described show a block for a five valve manifold. There are provisions made for mounting two block valves, one equalizer valve and two vent valves. Those skilled in the art will readily appreciate, however, that the features of the present invention can be applied in a three valve embodiment which typically has only two block valves and an equalizer valve.

It is true that the advantages of the compactness of the design of the block of the present invention are best appreciated in a five valve manifold. Yet, it can be said that there are "at least three" valve mounting openings, namely the threaded bores 132 and 136 for two block valves for selectively blocking the passage of the process fluid and one equalizing valve mounting bore 144. Note that the inner ends of the valve chambers associated with the mounting bores mentioned, namely valve chambers 131, 135 and the equalizer valve chamber 143 are all disposed with their inner ends (where the respective valve seats are located) located inside the imaginary prismatic surface. Of course, in a five valve manifold, the remaining two valve chambers 148, 152 meet the same criteria as the "at least three" chambers 131, 135, 143 with respect to their location relative to the mounting bores 160-163.

The drawings further show that the same compact size can be achieved, according to the invention, for a five valve manifold, where at least one, and preferably two, valve chambers 148, 1 52 and mounting bores are of a reduced diameter compared with chambers 131, 135, 143 but are relatively long to accommodate the type of a valve, where the valve seal is located on the valve stem and engages not the bonnet of the valve, but the interior of the valve chamber itself. This allows the use of an axially reduced length of the bonnet which, combined with a hexagonal head at the outer end of the valve stem, provides space saving feature whereby two valves can be located one to each side of another valve, in the exemplary embodiment, to each side of an equalizer valve. It is preferred that the valves in which the seal is inside the valve chamber and the stem has a hexagonal head for engagement by a wrench or the like, be vent valves. The hexagonal heads provide an additional safety feature as with the distinct appearance they virtually eliminate the possibility of inadvertent opening of the two valves instead of one of the remaining three valves.

Yet another feature seen from the drawings of the first embodiment is in that there is provided a five valve compact manifold wherein both the process fluid inlet and the vent outlet or outlets are arranged in the same face 122 of the body. This provides further reduction of the space required in comparison with existing five valve manifold, where the vent outlets usually have to be directed sideways and thus require additional space at the side of an installed manifold, for connection to vent pipes.

Despite the extremely small overall area of the face 122 of the block, there is sufficient spacing provided between the process fluid inlets and the vent outlets to allow the use of standard couplings for sealed connection. This is due to the fact that the use of one long and one short valve chamber 148, 152 disposed to both sides of but at a different level from the equalizer valve, permit the connection by short, easily machined passageways 154, 156 to vent outlet ports placed on an axis generally central to the block and perpendicular to the axis on which the process fluid inlet ports 127, 128 are located.

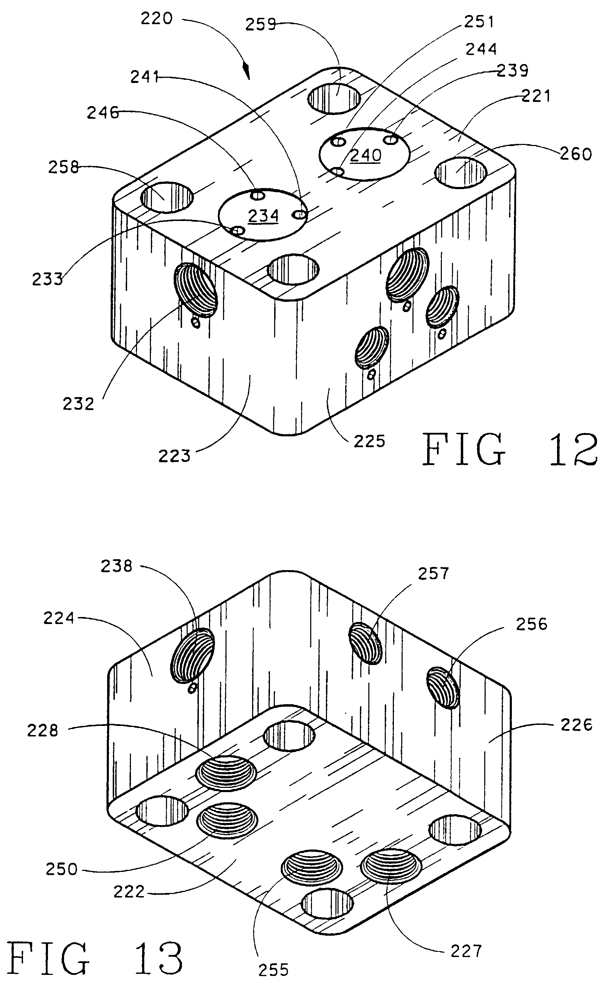

Another noteworthy feature of the manifold block shown in Figs. 1 - 11 but also in Figs. 12 to 20 is in that all passageways are comprised of straight passageway sections. These sections are all straight and are either perpendicular to the faces of the block or, if they are inclined, they are still parallel with at least one of the planar outer walls of the block. An example of such inclined passageway section is the oblique conduit 145 which is at an acute angle to the axis of the equalizer valve chamber 143 but is parallel with the top face 121. This is contrary to known multiple-valve manifolds where the valves are disposed on at least two distinct planes parallel with the top face, where a number of so called compound angle passages (i.e. passages which are obliquely inclined with respect to any of the six basic surface walls 121 - 126). The machining of compound angle passages presents a complex and thus expensive and time consuming task in producing the block. Their elimination is mainly facilitated by the use of the vent valve chambers 148, 152 (and also 248, 253) having a specifically designed length which depends upon the location of the vent valve ports 155, 157 relative to the process inlet ports 127, 128 (and also 255 and 255 vis-a-vis 227, 228 as described hereafter with reference to Figs/ 12, 13. The same applies to all other oblique or inclined passageway sections, for instance 129, 133, 146, 154, 156 and their counterparts 229, 235, 244 of the second embodiment which will now be described in greater detail.

Reference may now be had to Figs. 12 - 20 which show the second embodiment of the manifold block according to the invention. In many respects, the second embodiment includes features similar to those described with reference to Figs. 1 - 11, as witnessed, for instance, by the comments in the preceding paragraph.

As in the first embodiment, there is provided a solid, preferably, but not exclusively, stainless steel rectangular prism shaped block **220**. As in the preceding embodiments, the block has top and bottom wall **221**, **222**, a first side wall **223**, a second side wall **224** a front wall **225** and a rear wall **226**.

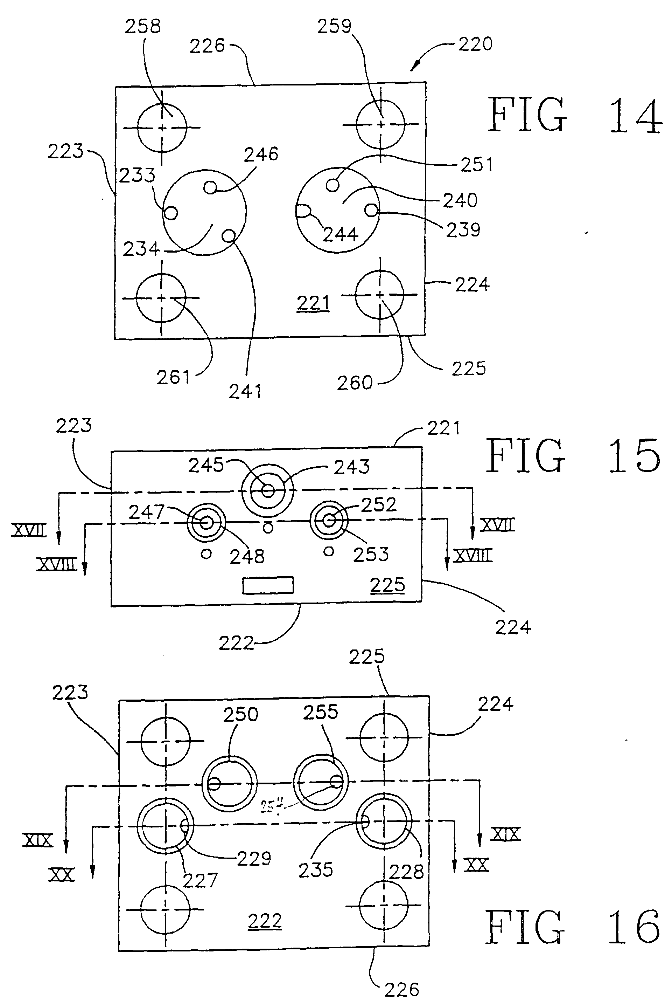

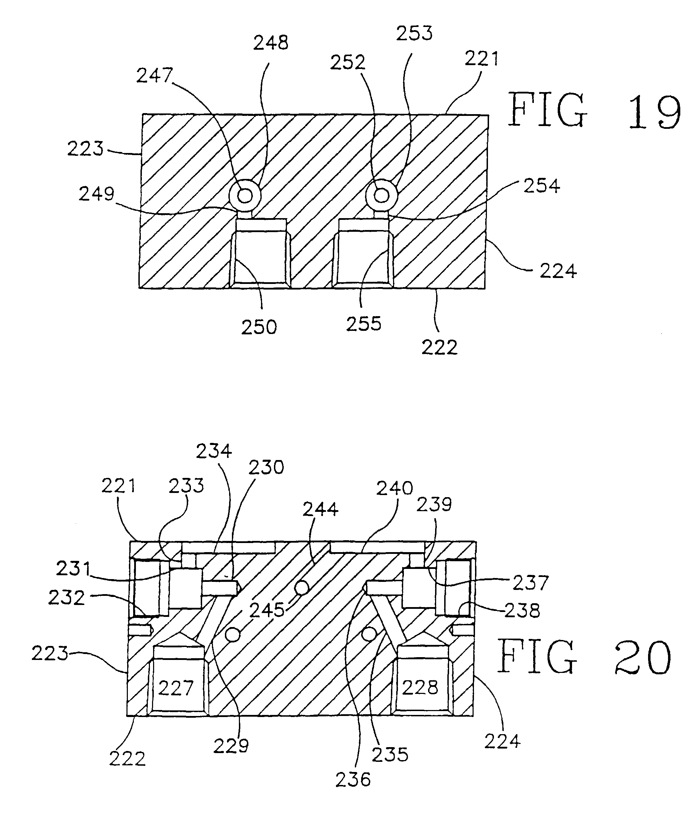

Fig. 16, shows first and second inlet ports **227**, **228** machined'in the bottom wall 222, for the process fluid. The inlet 227 communicates, via an upwardly and inwardly inclined first passage **229** with an extension **230** of a first block valve chamber **231** co-axial with a threaded first block valve bore **232**. The valve chamber **231**, in turn, communicates via a short connecting conduit **233** with a first instrument cavity **234**. The second inlet 228 communicates in the same fashion, via second passage **235**, extension **236** and valve chamber **237**, coaxial with threaded bore **238** of the second block valve, and then via a short, vertical connecting conduit **239** with the second instrument cavity **240**.

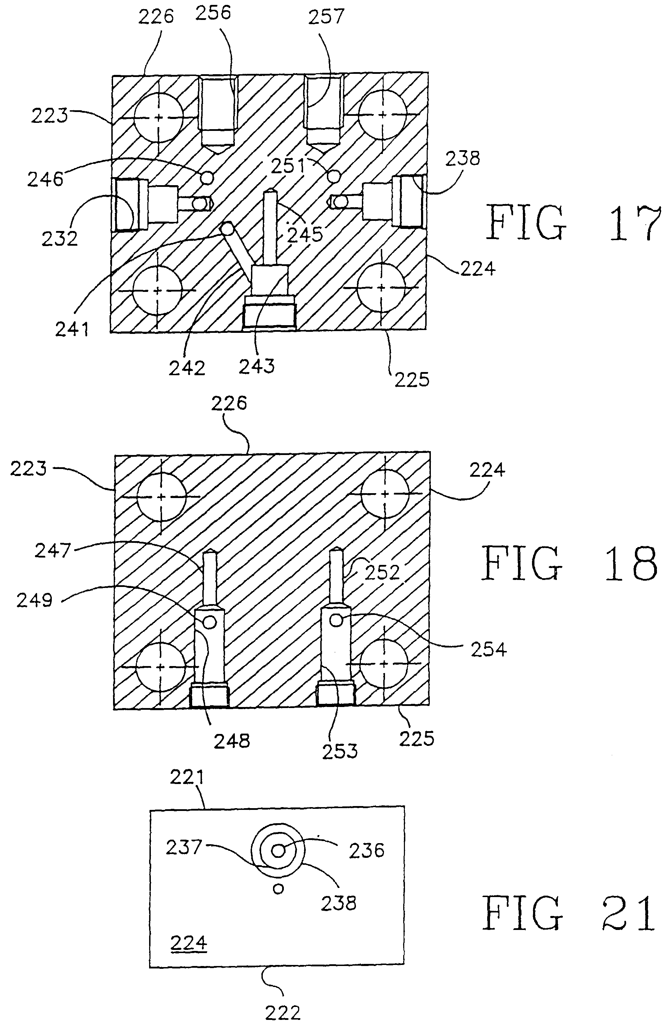

The first instrument cavity 234 further communicates via a first short, vertical equalizer channel **241** with a horizontal-oblique channel **242** (Fig. 17) the discharge end of which connects with an equalizer valve chamber **243**. Similarly, the second instrument cavity 240 communicates via a downwardly and inwardly sloping channel **244** the outlet of which merges with an inward end of an equalizer valve extension channel **245** (Figs. 17, 20) coaxial with the equalizer valve chamber 243.

Each of the circular cavities 234, 240 is connected to the respective vent conduit. The cavity 234 connects via a vertical conduit **246** (Fig. 14) with a horizontal extension line **247** (Figs. 18, 19) coaxial and in communication with a first vent valve chamber **248** which, in turn, connects through a short vertical line **249** with a threaded vent discharge port **250**. In an identical fashion, the cavity 240 connects via a conduit **251** (Figs. 14, 17), a horizontal extension **252** coaxial with second vent valve chamber **253,** the chamber 253 and a short vertical line **254** (Figs. 18, 19) with a threaded vent port **255.** Note that the length of the vent valve chambers 248, 253 is the same, but is greater than that of any of the remaining valve chambers 232, 237 and 243. This is to facilitate the orientation of the passageway sections 249, 254 which can be machined perpendicular to the second face 222 and straight into the vent discharge ports 250, 255 (Fig. 19).

As in the preceding embodiments, the threaded bores 256, 257 (Fig. 17) serve the purpose of securing the block 220 to a suitable support bracket or the like (not shown) and the four mounting holes **258** - **261** serve the purpose of accommodating bolts which hold a pressure transmitter in sealing engagement with the top surface 221 and thus with the cavities 234, 240.

Note that in the second embodiment the valve chambers 248, 253 of the vent valve mounting bores are of an even length. This feature accommodates the second preferred embodiment where the pairs of process fluid inlet ports 227, 228 and of the vent outlets 250, 255 are each on a separate reference line parallel with the other reference line, as opposed to the crossing arrangement of the reference lines in the first embodiment.

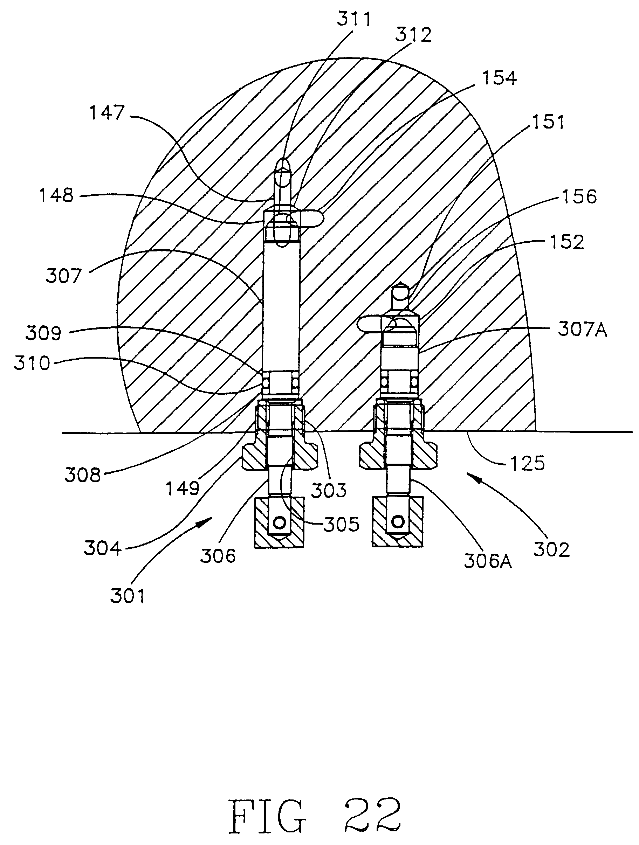

Referring now to Fig. 22, as mentioned above, the enlarged representation generally corresponds to a partial cross section view on line XXII - XXII of Fig. 4. Referring to the structure of the block itself, there is shown a pair of vent valves **301**, **302** installed in the first embodiment of the manifold block of the invention.

The long vent valve chamber 148, and the associated coaxial threaded bore 149 and the transverse conduit 154 and the extension conduit 147 are as shown in Fig. 5. Threaded in the thread of the first vent valve bore 149 is a bonnet 303 having a wrench compatible outer hexagonal portion **304**. The bonnet **303** has a coaxial threaded bore **305** which is threadably engaged by a threaded portion of a vent valve stem **306**. The inner part of the stem 306, marked with reference number **307**, is freely movable within the valve chamber 148. It is provided, at a point near the bonnet 303, with a seal mounting groove within which is disposed a pair of backup rings **308, 309** from Teflon and with an intermediately positioned sealing O-ring **310** made from a suitable elastomeric material.

The end of the stem 307 carries a hemispherical tip **311** compatible with a valve seat 312. Thus, the tip 311 co-operates with the valve seat 312 to selectively block or open the passage of fluid from extension conduit 147 to the transverse conduit 154 and from there to the first vent outlet 155.

The opposite, outer end of the stem 307 has fixedly secured to it a hexagonal head compatible with a suitable wrench. Accordingly the vent valve can only be open or closed by using a suitable tool.

The valve mounted in the second vent valve mounting bore comprised (Fig. 7) of the threaded second vent valve bore 153 and the coaxial second vent valve chamber 152 communicating with the short extension conduit 151 and with the transverse conduit 156 (Fig. 11) which terminates at the second vent outlet 157.

The overall arrangement of the second vent valve 302 is the same as that of the first vent valve described above except for the length of the inner part 307a of the valve stem 306a. Therefore, the parts of the second vent valve 302 and the associated second valve mounting bore are not described in detail.

Fig. 22 shows the valves 301, 302 in an open state. Using a suitable wrench, the stem **306** can be turned to cause, an axial displacement of the stem 306 toward the seat 312 until the tip **311** sealingly engages the seat 312 to interrupt the flow of the fluid from extension line 147 to the transverse conduit 154.

The operation of the manifolds described is a typical operation of a five-valve manifold which is known per se and therefore does not have to be described. It will suffice to briefly mention that under normal circumstances, when a pressure differential is to be sensed at the pressure transmitter or the like pressure processing apparatus, blocking valves mounted in the mounting bores 132, 136 or 232, 238 are open allowing communication between the process inlet ports and the cavities. If absolute pressure is to be sensed, one of the block valves is closed. If pressure is to be made equal at both sides of a diaphragm of the sensing apparatus, the equalization valve is open. And the vent valves are open whenever one or both cavities at the instrument are to be relieved of pressure.

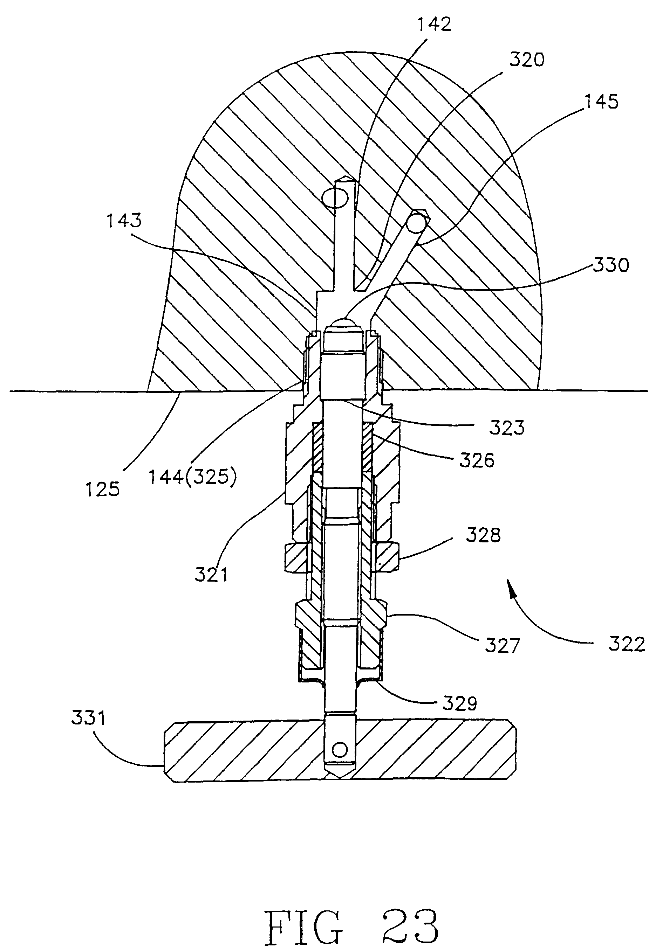

Reference should now be had to the arrangement shown in Fig. 23. While the drawings of the present specification are not to scale, an effort has been made to show the true relative size of the components shown in Fig. 23.

The manifold block is the same as that of Fig. 23, as indicated by reference number 125 designating the front wall of the block. As described, the equalizer valve mounting bore comprises the valve chamber 143 (Fig. 6) and a threaded bore 144 at the front wall 125. The valve chamber 143 communicates, via an opening at the valve seat **320** with the extension conduit 142 and, via an opening in the side wall of the valve chamber 143, with the oblique conduit 145.

The threaded bore 144 threadably receives a bonnet **321** of an equalizer valve referred to with reference number **322**. The equalizer valve 322 and thus the equalizer valve mounting bore 144, 143 are of the type typically used in valve manifold of this type. That is to say, the valve 322 is of the type wherein a valve stem **323** is threadably received in the bonnet 321. The bonnet has an outer thread **325** mounted in the threaded bore 144, as is well known in the art.

The bonnet defines a packing chamber which receives a packing **326** held in place and compressed by a packing gland **327** threaded in the outer end of the packing chamber and locked in its position by a locking nut **328**. The inside and axially outer portion of the gland 327 is threaded by a thread compatible with that on the outside of the stem 323. A dust cap **329** protects the threaded connection between the stem 323 and the gland 327. The inner end of the stem 323 is provided with a hemispherical closing member **330** compatible with the seat 320 so that the operation of the valve 322 by the handle **331** results in selective closing or opening of the fluid flow from the extension conduit 142, through the valve chamber 143 and into the oblique conduit.

The valve 322 is one of many commercially available valves of the type with the packing inside the bonnet. it can be readily appreciated that the valve 322 requires substantially more space at the exterior of the manifold (i.e. at the vicinity of the front wall 125) both as to the overall maximum length as a distance from the wall 125, and as regards the overall diameter. The vent valve 301 or 302, on the other hand, requires a much shorter outer length and a smaller diameter, not to mention that the selectively designed length of the valve chamber 148 or 152 can be utilized in simplifying the structure of the conduits of the manifold by bringing the respective valve seat and the outlet port to a position where the connecting conduits do not require to be at a complex angle of a double oblique inclination relative to the surface of the block.

Those skilled in the art will appreciate that further embodiments exist which differ from those described, without departing from the scope of the present invention as set forth in the accompanying claims. For instance, as one of many variants, while the five valve arrangement is preferred, it is not beyond the scope of the present invention to provide an arrangement where only one vent valve mounting hole (and thus only one vent valve) would be provided. Another readily conceivable variant is that where, in some installations, the structure of the vent valve utilized in the preferred embodiments, could be utilized for another type of valve or valves.

## Claims

1. A valve manifold for use with a pressure sensing apparatus, comprising, in combination:
(a) an integral body (120, 220) including a first face section (121, 221), a second face section (122, 222) generally parallel with the first face section (121, 221) and a multilateral, preferably quadrilateral peripheral section (123-126; 223-226) extending between the first and second face sections;
(b) a process fluid inlet port means (127, 128; 227, 228) in said second face section (122, 222) and a process fluid outlet port means (138, 140; 234, 240) in said first face section (121, 221), said process fluid outlet port means (138, 140; 234, 240) being complementary with inlet ports of an associated pressure sensing apparatus;
(c) a passageway system comprised of a plurality of passageways fluidly communicating said inlet and outlet port means with one another;
(d) a plurality of apparatus mounting holes (160-163; 258-261) provided in said first face section (121, 221) and disposed about the periphery of the first face section (121, 221), preferably near the corner of said peripheral section, for receiving bolts operatively securing the pressure sensing apparatus to said first face section (121, 221);
(e) said apparatus mounting holes ( 160-163; 258-261) having axes generally perpendicular to said first face section (121, 221), said axes defining sides of a reference prism having ends coplanar with said first and second face sections, at least some of said axes being coincident with corners of said reference prism;
(f) a plurality of valve mounting bores (132, 136, 144, 149, 153; 232, 238, 243, 248, 253), each bore extending from a point on said peripheral section (123-126; 223-226) inwards of the body, each valve mounting bore including a threaded outer end portion at said peripheral section (123-126; 223-226) and a coaxial, generally cylindrical valve chamber (131, 135, 143, 148, 152; 231, 237, 243, 248, 253) defining an inner end portion of the bore, forming a part of said passageway system
(g) each valve chamber including a valve seat coincident with an outlet of an upstream section of a respective passageway into the respective valve chamber;
(h) each said valve chamber further communicating through a port provided in a side wall thereof, with a downstream section of the respective passageway;
**characterized in that**
the valve seat of each of said valve chambers (131, 135, 143, 148, 152, 231, 237, 243, 248, 253) is located within a space delimited by said reference prism.

2. The valve manifold of claim 1, in which
(i) the manifold comprises a pair of vent outlet port means (155, 157; 250, 255)
(ii) both said vent outlet port means are disposed in said second face section (122, 222),
(iii) each vent outlet port means (155, 157; 250, 255) fluidly communicates with a communication port provided in the side wall of its associated valve chamber (148, 152; 248, 253) near the vent valve seat thereof,
(iv) said vent valve chambers (148, 152; 248, 253) are both provided in the same one of said peripheral walls, defining each a part of one of a pair of vent valve mounting bores (149, 153; 248, 253),
(v) the length of any one of said vent valve chambers is larger than that of any one of the remaining valve chambers (131, 135, 143, 231, 237, 243).

3. The manifold of claim 1 including two, three, four or five said valve mounting bores (132, 136, 144, 149, 153; 232, 238, 243, 248, 253) and comprising vent outlet port means (155, 157, 250, 255), wherein the vent outlet port means (155, 157; 250, 255) is disposed in said second face section (122, 222).

4. The manifold of claim 3, wherein the process fluid inlet port means is a pair of inlet ports (127, 128) and the vent outlet port means (155, 157) is a pair of vent outlet ports and wherein the inlet ports (127, 128) have centres disposed on a first reference line coincident with said second face section (122), and the centers of the vent outlet ports (155, 157) are disposed on a second reference line coincident with said second face section (122) and intersecting the first reference line at generally right angles, the point of intersection of the reference lines being disposed generally centrally of said second face section (122).

5. The manifold of claim 3, wherein the process fluid inlet port means is a pair of inlet ports (227, 228) and the vent outlet port means is a pair of vent outlet ports (250, 255), and wherein the inlet ports (227, 228) having centers disposed on a first reference line coincident with said second face section (222), and that the vent outlet ports (250, 255) have centers disposed on a second reference line coincident with said second face section (222) and generally parallel with the first reference line.

6. The manifold as claimed in any of claims 2, 3, 4 or 5, in which the peripheral section (123-126; 223-226) comprises a plurality of generally planar peripheral walls (123-126; 223-226), one (125, 225) of the said peripheral walls being provided with a pair of parallel vent valve mounting bores (149, 153; 248, 253), each vent valve chamber (148, 152; 248, 253) of the vent valve mounting bores fluidly communicates, via a communication port, with one end of a vent conduit (154, 156; 249, 254) the other end of the vent conduit fluidly communicating with a respective vent outlet (155, 157; 250, 255), and wherein the axes of the vent valve chambers (148, 152; 248, 253) are equally spaced from said first face section (121, 221) and that the respective communication port is located near the valve seat of the respective vent valve chamber (148, 152; 248, 253).

7. The manifold as claimed in claim 6 as dependent on claim 4, in which the vent valve chambers (148, 152) are of a different length, whereby the communication ports are each at a different distance from said one (125) of the said peripheral walls.

8. The manifold of claim 2 or claim 7, wherein each vent valve mounting bore (149, 153) of said pair is provided with a valve assembly including a valve stem (306, 306A) threaded in a bonnet (303) compatible with a threaded outer portion (149, 153), and having a valve closing member (311) at a free end of the stem (306), for engagement with the respective valve seat, and a seal (310) for sealingly engaging said stem (306, 306A), and wherein said valve assembly is of the type where the seal (310) is adapted to further sealing engage the respective cylindric valve chamber, said seal (310) being disposed at a location of the stem (306, 306A) between the closing member and the bonnet (303), the bonnet being devoid of a sealing engagement with the stem and thus being of a reduced overall diameter.

9. The manifold according to any of claims 6, 7 or 8, in which a third, preferably, an equalizer valve mounting bore (143, 243) is provided in said one (125, 225) of said peripheral walls, said third valve mounting bore (143, 243):
(a) being generally parallel with said pair of said vent valve mounting bores (149, 153; 248, 253)
(b) being disposed between said pair of said vent valve mounting bores and at a closer spacing from one (121, 221) of said face sections;
(c) having a valve seat closer to said one (125, 225) of the peripheral walls than the valve seat of any of said pair of vent valve mounting bores (149, 153; 248, 253).

10. The manifold of claim 9, comprising two block valve mounting bores (132, 136; 232, 238) provided one in each of two further generally planar peripheral walls (123, 124; 223, 224) of the body (120, 226) wherein said further peripheral walls (123, 124; 223, 224) are two parallel, opposed peripheral walls distinct from said one (125, 225) of said peripheral walls.

11. A valve manifold as claimed in any of the preceding claims, in which said passageways are comprised of a plurality of straight passageway sections communicating with one another, with said port means and with said valve chambers, and wherein said passageway sections are so disposed and arranged that each passageway section is parallel with at least one of said faces (121, 122; 221, 222) or said peripheral walls (123, 124, 223, 224) or said front and rear walls (125, 126; 225, 226), whereby the machining of said passage sections is facilitated.

12. The valve manifold as claimed in any of the preceding claims, in which
(a) the axes of three of said valve mounting bores (132, 136, 144; 232, 238, 243) are disposed on a first reference plane parallel with said face sections (121, 122; 221, 222); and
(b) the axes of two (149, 153; 248, 253) of said valve mounting bores are disposed on a second reference plane parallel with said face sections (121, 122; 221, 222) and spaced from said first reference plane.

13. The valve manifold of claim 12, wherein said two (149, 153; 248, 253) of said valve mounting bores are vent valve mounting bores.

14. The manifold of claim 8, in which an outer end of the vent valve stem (306, 306 A) of said vent valve assembly remote from the valve closing member (330) is shaped for engagement with a complementary wrench or the like readily removable torque inducing tool.

15. The manifold as claimed in any of the preceding claims, wherein the centers of said process fluid inlet port means (127, 128; 227, 228) and of said process fluid outlet port means (138, 140; 234, 240) are located within a space delimited by said reference prism.

## Patentansprüche

1. Ventilverteiler zur Verwendung bei einer Druckfühlvorrichtung, der, in Kombination, aufweist:
(a) einen integralen Körper (120, 220), der einen ersten Seitenabschnitt (121, 221), einen zweiten Seitenabschnitt (122, 222), im wesentlichen parallel zu dem ersten Seitenabschnitt (121, 221), und einen mehrseitigen, vorzugsweise vierseitigen, peripheren Abschnitt (123-126; 223-226), der sich zwischen dem ersten und dem zweiten Seitenabschnitt erstreckt, umfaßt;
(b) eine Prozeßfluideinlaßöffnungseinrichtung (127, 128; 227, 228) in dem zweiten Seitenabschnitt (122, 222) und eine Prozeßfluidauslaßöffnungseinrichtung (138, 140; 234, 240) in dem ersten Seitenabschnitt (121, 221), wobei die Prozeßfluidauslaßöffnungseinrichtung (138, 140; 234, 240) komplementär zu Einlaßöffnungen einer zugeordneten Druckfühlvorrichtung ist;
(c) ein Durchgangswegsystem, das eine Vielzahl von Durchgangswegen aufweist, die fluidmäßig die Einlaß- und Auslaßöffnungseinrichtung miteinander in Verbindung setzt;
(d) eine Vielzahl von Vorrichtungsbefestigungslöchern (160-163; 258-261), vorgesehen in dem ersten Seitenabschnitt (121, 221) und um den Umfang des ersten Seitenabschnitts (121, 221) angeordnet, vorzugsweise nahe der Ecke des peripheren Abschnitts, zum Aufnehmen von Schrauben, die betriebsmäßig die Druckfühlvorrichtung an dem ersten Seitenabschnitt (121, 221) sichern;
(e) wobei die Vorrichtungsbefestigungslöcher (160-163; 258-261) Achsen im wesentlichen senkrecht zu dem ersten Seitenabschnitt (121, 221) besitzen, wobei die Achsen Seiten eines Referenzprismas definieren, das Enden koplanar zu dem ersten und dem zweiten Seitenabschnitt besitzt, wobei mindestens einige der Achsen mit Ecken des Referenzprismas übereinstimmend sind;
(f) eine Vielzahl Ventilbefestigungsbohrungen (132, 136, 144, 149, 153; 232, 238, 243, 248, 253), wobei sich jede Bohrung von einem Punkt auf dem peripheren Abschnitt (123-126; 223-226) nach innen des Körpers erstreckt, wobei jede Ventilbefestigungsbohrung einen mit Gewinde versehenen äußeren Endbereich an dem peripheren Abschnitt (123-126; 223-226) und eine koaxiale, im wesentlichen zylindrische Ventilkammer (131, 135, 143, 148, 152; 231, 237, 243, 248, 253), die einen inneren Endbereich der Bohrung definieren, der einen Teil des Durchgangswegsystems bildet, umfaßt;
(g) wobei jede Ventilkammer einen Ventilsitz übereinstimmend mit einem Auslaß eines einströmseitigen Abschnitts eines jeweiligen Durchgangswegs in die jeweilige Ventilkammer hinein umfaßt;
(h) wobei jede Ventilkammer weiterhin über eine Öffnung, die in einer Seitenwand davon vorgesehen ist, mit einem ausströmseitigen Abschnitt des jeweiligen Durchgangswegs in Verbindung steht;
dadurch gekennzeichnet, daß
der Ventilsitz jeder der Ventilkammern (131, 135, 143, 148, 152, 231, 237, 243, 248, 253) innerhalb eines Raums angeordnet ist, der durch das Referenzprisma begrenzt ist.

2. Ventilverteiler nach Anspruch 1, wobei
(i) der Verteiler ein Paar Belüftungsauslaßöffnungseinrichtungen (155, 157; 250, 255) aufweist,
(ii) beide der Ventilauslaßöffnungseinrichtungen in dem zweiten Seitenabschnitt (122, 222) angeordnet sind,
(iii) jede Ventilauslaßöffnungseinrichtung (155, 157; 250, 255) fluidmäßig mit einer Kommunikationsöffnung in Verbindung steht, die in der Seitenwand deren zugeordneter Ventilkammer (148, 152; 248, 253) nahe dem Belüftungsventilsitz davon vorgesehen ist,
(iv) die Belüftungsventilkammern (148, 152; 248, 253) beide in derselben einen der peripheren Wände vorgesehen sind, die jeweils einen Teil einer eines Paars Belüftungsventilbefestigungsbohrungen (149, 153; 248, 253) definieren,
(v) die Länge irgendeiner der Belüftungsventilkammern größer als diejenige irgendeiner der verbleibenden Ventilkammern (131, 135, 143, 231, 237, 243) ist.

3. Verteiler nach Anspruch 1, der zwei, drei, vier oder fünf der Ventilbefestigungsbohrungen (132, 136, 144, 149, 153; 232, 238, 243, 248, 253) umfaßt und Belüftungsauslaßöffnungseinrichtungen (155, 157, 250, 255) aufweist, wobei die Belüftungsauslaßöffnungseinrichtungen (155, 157; 250, 255) in dem zweiten Seitenabschnitt (122, 222) angeordnet sind.

4. Verteiler nach Anspruch 3, wobei die Prozeßfluideinlaßöffnungseinrichtung ein Paar von Einlaßöffnungen (127, 128) ist und die Belüftungsauslaßöffnungseinrichtung (155, 157) ein Paar von Belüftungsauslaßöffnungen ist und wobei die Einlaßöffnungen (127, 128) Zentren haben, die auf einer ersten Referenzlinie übereinstimmend mit dem zweiten Seitenabschnitt (122) angeordnet sind, und die Zentren der Belüftungsauslaßöffnungen (155, 157) auf einer zweiten Referenzlinie übereinstimmend mit dem zweiten Seitenabschnitt (122) angeordnet sind und die erste Referenzlinie unter im wesentlichen rechten Winkeln schneiden, wobei der Schnittpunkt der Referenzlinien im wesentlichen zentral des zweiten Seitenabschnitts (122) angeordnet ist.

5. Verteiler nach Anspruch 3, wobei die Prozeßfluideinlaßöffnungseinrichtung ein Paar von Einlaßöffnungen (227, 228) ist und die Belüftungsauslaßöffnungseinrichtung ein Paar von Belüftungsauslaßöffnungen (250, 255) ist, und wobei die Einlaßöffnungen (227, 228) Zentren haben, die auf einer ersten Referenzlinie übereinstimmend mit dem zweiten Seitenabschnitt (222) angeordnet sind, und daß die Belüftungsauslaßöffnungen (250, 255) Zentren haben, die auf einer zweiten Referenzlinie übereinstimmend mit dem zweiten Seitenabschnitt (222) und im wesentlichen parallel zu der ersten Referenzlinie angeordnet sind.

6. Verteiler nach einem der Ansprüche 2, 3, 4 oder 5, wobei der periphere Abschnitt (123-126; 223-226) eine Vielzahl im wesentlichen ebener, peripherer Wände (123-126; 223-226) aufweist, wobei eine (125, 225) der peripheren Wände mit einem Paar paralleler Belüftungsventilbefestigungsbohrungen (149, 153; 248, 253) versehen ist, wobei jede Belüftungsventilkammer (148, 152; 248, 253) der Belüftungsventilbefestigungsbohrungen fluidmäßig, über eine Kommunikationsöffnung, mit einem Ende eines Belüftungskanals (154, 156; 249, 254) das andere Ende des Belüftungskanals fluidmäßig, der mit einem jeweiligen Belüftungsauslaß (155, 157; 250, 255) in Verbindung steht, in Verbindung setzt, und wobei die Achsen der Belüftungsventilkammern (148, 152; 248, 253) gleichmäßig von dem ersten Seitenabschnitt (121, 221) beabstandet sind, und daß die jeweilige Kommunikationsöffnung nahe dem Ventilsitz der jeweiligen Belüftungsventilkammer (148, 152; 248, 253) angeordnet ist.

7. Verteiler nach Anspruch 6 in Abhängigkeit von Anspruch 4, wobei die Belüftungsventilkammern (148, 152) von einer unterschiedlichen Länge sind, wodurch die Kommunikationsöffnungen jeweils unter einem unterschiedlichen Abstand von der einen (125) der peripheren Wände vorhanden sind.

8. Verteiler nach Anspruch 2 oder Anspruch 7, wobei jede Belüftungsventilbefestigungsbohrung (149, 153) des Paars mit einer Ventilanordnung versehen ist, die einen Ventilschaft (306, 306A) umfaßt, der in eine Kappe (303) eingeschraubt ist, die mit einem mit Gewinde versehenen äußeren Bereich (149, 153) kompatibel ist, und ein Ventilschließteil (311) an einem freien Ende des Schafts (306) für einen Eingriff mit dem jeweiligen Ventilsitz und eine Dichtung (310) für ein dichtendes Eingreifen in den Schaft (306, 306A) besitzt, und wobei die Ventilanordnung von dem Typ ist, bei dem die Dichtung (310) so angepaßt ist, um weiterhin dichtend in die jeweilige zylindrische Ventilkammer einzugreifen, wobei die Dichtung (310) an einer Stelle des Schafts (306, 306A) zwischen dem Schließteil und der Kappe (303) angeordnet ist, wobei die Kappe frei von einem dichtenden Eingriff mit dem Schaft ist und demzufolge von einem verringerten Gesamtdurchmesser ist.

9. Verteiler nach einem der Ansprüche 6, 7 oder 8, wobei eine dritte, vorzugsweise eine Ausgleichsventilbefestigungsbohrung (143, 243), in der einen (125, 225) der peripheren Wände vorgesehen ist, wobei die dritte Ventilbefestigungsbohrung (143, 243);
(a) im wesentlichen parallel zu dem Paar der Belüftungsventilbefestigungsbohrungen (149, 153; 248, 253) liegt;
(b) zwischen dem Paar der Belüftungsventilbefestigungsbohrungen und unter einer näheren Beabstandung von einem (121, 221) der Seitenabschnitte angeordnet ist;
(c) einen Ventilsitz näher zu der einen (125, 225) der peripheren Wände als der Ventilsitz irgendeines des Paars Belüftungsventilbefestigungsbohrungen (149, 153; 248, 253) besitzt.

10. Verteiler nach Anspruch 9, der zwei Blockventilbefestigungsbohrungen (132, 136; 232, 238), vorgesehen eine in jeder von zwei weiteren, im wesentlichen planaren, peripheren Wänden (123, 124; 223, 224) des Körpers (120, 220), aufweist, wobei die weiteren, peripheren Wände (123, 124; 223, 224) zwei parallele, gegenüberliegende, periphere Wände unterschiedlich zu der einen (125, 225) der peripheren Wände sind.

11. Ventilverteiler nach einem der vorhergehenden Ansprüche, wobei die Durchgangswege aus einer Vielzahl von geraden Durchgangswegabschnitten zusammengesetzt sind, die miteinander mit den Öffnungseinrichtungen und mit den Ventilkammern in Verbindung stehen, und wobei die Durchgangswegabschnitte so aufgebaut und angeordnet sind, daß jeder Durchgangswegabschnitt parallel zu mindestens einer der Seiten (121, 122; 221, 222) oder der peripheren Wände (123, 124, 223, 224) oder der vorderen und hinteren Wand (125, 126; 225, 226) liegt, wodurch die Maschinenbearbeitung der Kanalabschnitte erleichtert wird.

12. Ventilverteiler nach einem der vorhergehenden Ansprüche, wobei
(a) die Achsen von drei der Ventilbefestigungsbohrungen (132, 136, 144; 232, 238, 243) auf einer ersten Referenzebene parallel zu den Seitenabschnitten (121, 122; 221, 222) angeordnet sind; und
(b) die Achsen von zwei (149, 153; 248, 253) der Ventilbefestigungsbohrungen auf einer zweiten Referenzebene parallel zu den Seitenabschnitten (121, 122; 221, 222) angeordnet und von der ersten Referenzebene beabstandet sind.

13. Ventilverteiler nach Anspruch 12, wobei die zwei (149, 153; 248, 253) der Ventilbefestigungsbohrungen Belüftungsventilbefestigungsbohrungen sind.

14. Verteiler nach Anspruch 8, wobei ein äußeres Ende des Belüftungsventilschafts (306, 306A) der Belüftungsventilanordnung, entfernt von dem Ventilschließelement (330), für einen Eingriff mit einem komplementären Schlüssel oder dem entsprechenden, leicht entfernbaren, ein Drehmoment entwickelnden Werkzeug geformt ist.

15. Verteiler nach einem der vorhergehenden Ansprüche, wobei die Zentren der Prozeßfluideinlaßöffnungseinrichtungen (127, 128; 227, 228) und der Prozeßfluidauslaßöffnungseinrichtungen (138, 140; 234, 240) innerhalb eines Raums angeordnet sind, der durch das Referenzprisma begrenzt ist.

## Revendications

1. Collecteur à soupape à utiliser avec un appareil détectant la pression, comprenant en combinaison:
(a) un corps solidaire (120, 220) englobant une première section frontale (121, 221), une deuxième section frontale (122, 222) généralement parallèle à la première section frontale (121, 221) et une section périphérique polygonale (123-126; 223-226) de préférence en forme de quadrilatère s'étendant entre les première et deuxième sections frontales;
(b) un moyen d'orifice d'entrée de fluide de traitement (127, 128; 227, 228) dans ladite deuxième section frontale (122, 222) et un moyen d'orifice de sortie de fluide de traitement (138, 140; 234, 240) dans ladite première section frontale (121, 221), ledit moyen d'orifice de sortie de fluide de traitement (138, 140; 234, 240) épousant la forme des orifices d'entrée d'un appareil associé détectant la pression;
(c) un système de passages comprenant plusieurs passages établissant une communication de fluide entre lesdits moyens d'orifices d'entrée et de sortie l'un par rapport à l'autre;
(d) plusieurs trous de montage d'appareil (160-163; 258-261) prévus dans ladite première section frontale (121, 221) et disposés autour de la périphérie de la première section frontale (121, 221) de préférence à proximité du coin de ladite section périphérique, pour que viennent s'y loger des boulons fixant en entraînement l'appareil détectant la pression à ladite première section frontale (121, 221);
(e) lesdits trous de montage d'appareil (160-163; 258-261) possédant des axes généralement perpendiculaires à ladite première section frontale (121, 221), lesdits axes définissant les côtés d'un prisme de référence dont les extrémités sont coplanaires avec lesdites première et deuxième sections frontales, au moins un certain nombre desdits axes coïncidant avec les coins dudit prisme de référence;
(f) plusieurs alésages de montage de soupapes (132, 136, 144, 149, 153; 232, 238, 243, 248, 263), chaque alésage s'étendant depuis un endroit sur ladite section périphérique (123-126; 223-226) jusqu'à l'intérieur du corps, chaque alésage de montage de soupape englobant une portion terminale externe filetée à ladite section périphérique (123-126; 223-226) et une chambre de soupape coaxiale généralement cylindrique (131, 135, 143, 148, 152; 231, 237, 243, 248, 253) définissant une portion terminale interne de l'alésage, formant une partie dudit système de passage;
(g) chaque chambre de soupape englobant un siège de soupape coïncidant avec une sortie d'une section amont d'un passage respectif, menant à la chambre de soupape respective;
(h) chacune desdites chambres de soupapes communiquant en outre via un orifice prévu dans une paroi latérale de la première citée, avec une section aval du passage respectif;
caractérisé en ce que
le siège de soupape de chacune desdites chambres de soupapes (131, 135, 143, 148, 152, 231, 237, 243, 248, 253) est situé à l'intérieur d'un espace délimité par ledit prisme de référence.

2. Collecteur à soupape selon la revendication 1, dans lequel
(i) le collecteur comprend une paire de moyens d'orifices de sortie de désaération (155, 157; 250, 255),
(ii) lesdits deux moyens d'orifices de sortie de désaération sont disposés dans ladite deuxième section frontale (122, 222);
(iii) chaque moyen d'orifice de sortie de désaération (155, 157; 250, 255) communique par fluide avec un orifice de communication prévu dans la paroi latérale de sa chambre de soupape associée (148, 152; 248, 253) à proximité de son siège de soupape de désaération;
(iv) lesdites chambres de soupapes de désaération (148, 152; 248, 253) sont toutes deux prévues dans la même paroi périphérique, définissant chacune une partie d'un alésage faisant partie d'une paire d'alésages de montage de soupapes de désaération (149, 153, 248, 253),
(v) la longueur de l'une quelconque desdites chambres de soupapes de désaération est supérieure à celle de l'une quelconque des chambres de soupapes restantes (131, 135, 143, 231, 237, 243).

3. Collecteur selon la revendication 1, englobant deux, trois, quatre ou cinq desdits alésages de montage de soupapes (132, 136, 144, 149, 153; 232, 238, 243, 248, 253) et comprenant des moyens d'orifices de sortie de désaération (155, 157; 250, 255), dans lequel les moyens d'orifice de sortie de désaération (155, 157; 250, 255) sont disposés dans ladite deuxième section frontale (122, 222).

4. Collecteur selon la revendication 3, dans lequel le moyen d'orifice d'entrée de fluide de traitement représente une paire d'orifices d'entrée (127, 128) et les moyens d'orifices de sortie de désaération (155, 157) représentent une paire d'orifices de sortie de désaération, et dans lequel les centres des orifices d'entrée (127, 128) sont disposés sur une première ligne de référence coïncidant avec ladite deuxième section frontale (122), les centres des orifices de sortie de désaération (155, 157) étant disposés sur une seconde ligne de référence coïncidant avec ladite deuxième section frontale (122) et coupant la première ligne de référence en formant en général un angle droit, le point d'intersection des lignes de référence étant disposé généralement au centre de ladite deuxième section frontale (122).

5. Collecteur selon la revendication 3, dans lequel les moyens d'orifices d'entrée de fluide de traitement représentent une paire d'orifices d'entrée (227, 228) et les moyens d'orifices de sortie de désaération représentent une paire d'orifices de sortie de désaération (250, 255), et dans lequel les centres des orifices d'entrée (227, 228) sont disposés sur une première ligne de référence coïncidant avec ladite deuxième section frontale (222) et les centres des orifices de sortie de désaération (250, 255) sont disposés sur une seconde ligne de référence coïncidant avec ladite deuxième section frontale (222) et s'étendent généralement parallèlement à ladite première ligne de référence.

6. Collecteur à soupape selon l'une quelconque des revendications 2, 3, 4 ou 5, dans lequel la section périphérique (123-126; 223-226) comprend plusieurs parois périphériques généralement planes (123-126; 223-226), une paroi (125, 225) desdites parois périphériques étant munie d'une paire d'alésages de montage de soupapes de désaération parallèles (149, 153; 248, 253); chaque chambre de soupape de désaération (148, 152; 248, 253) des alésages de montage de soupapes de désaération communiquant par fluide, via un orifice de communication, avec une extrémité d'un conduit de désaération (154, 156; 249, 254), l'autre extrémité du conduit de désaération communiquant par fluide avec une sortie de désaération respective (155, 157; 250, 255), et dans lequel les axes des chambres de soupapes de désaération (148, 152; 248, 253) sont équidistants par rapport à ladite première section frontale (121, 221) et dans lequel l'orifice de communication respectif est situé à proximité du siège de soupape de la chambre de soupape de désaération respective (148, 152; 248, 253).

7. Collecteur selon la revendication 6 lorsqu'elle dépend de la revendication 4, dans lequel les chambres de soupapes de désaération (148, 152) sont de longueur différente, les orifices de communication étant ainsi respectivement disposés à une distance différente par rapport à ladite paroi (125) desdites parois périphériques.

8. Collecteur selon la revendication 2 ou 7, dans lequel chaque alésage de montage de soupape de désaération (149, 153) de ladite paire est muni d'un assemblage de soupape englobant une tige de soupape (306, 306A) vissée dans un chapeau (303) épousant la forme d'une portion externe filetée (149, 153), et possédant un élément de fermeture de soupape (311) à une extrémité libre de la tige (306), destiné à entrer en contact avec le siège de soupape respectif, ainsi qu'un joint étanche (310) destiné à entrer en contact d'étanchéité avec ladite tige (306, 306A), et dans lequel ledit assemblage de soupapes est du type dans lequel le joint étanche (310) est conçu pour entrer en outre en contact d'étanchéité avec la chambre de soupape cylindrique respective, ledit joint étanche (310) étant disposé à un endroit de la tige (306, 306A) situé entre l'élément de fermeture et le chapeau (303), le chapeau étant dépourvu d'une mise en contact d'étanchéité avec la tige et possédant par conséquent un diamètre global réduit.

9. Collecteur selon l'une quelconque des revendications 6, 7 ou 8, dans lequel on prévoit de préférence un troisième alésage de montage de soupape de compensation (143, 243) dans ladite paroi (125, 225) desdites parois périphériques, ledit troisième alésage de montage de soupape (143, 243):
(a) étant généralement parallèle à ladite paire d'alésages de montage de soupapes de désaération (149, 153; 248, 253),
(b) étant disposé entre ladite paire desdits alésages de montage de soupapes de désaération et à un endroit moins éloigné de la section (121, 221) desdites sections frontales;
(c) possédant un siège de soupape disposé plus près de ladite paroi (125, 225) des parois périphériques que le siège de soupape de l'une quelconque desdites paires d'alésages de montage de soupapes de désaération (149, 153; 248, 253).

10. Collecteur selon la revendication 9, comprenant deux alésages de montage de soupapes de séparation (132, 136; 232, 238) prévus respectivement dans respectivement deux parois périphériques supplémentaires généralement planes (123, 124; 223, 224) du corps (120, 220); dans lequel lesdites parois périphériques supplémentaires (123, 124; 223, 224) représentent deux parois périphériques opposées parallèles distinctes de ladite paroi (125, 225) desdites parois périphériques.

11. Collecteur à soupape selon l'une quelconque des revendications précédentes, dans lequel lesdits passages comprennent plusieurs sections de passages rectilignes communiquant l'une avec l'autre, avec lesdits moyens d'orifices et avec lesdites chambres de soupapes, et dans lequel lesdites sections de passages sont disposées et arrangées de telle sorte que chaque section de passage est parallèle au moins avec, soit lesdites sections frontales (121, 122; 221, 222), soit lesdites parois périphériques (123, 124, 223, 224), soit lesdites parois frontales et dorsales (125, 126; 225, 226), ce qui facilite l'usinage desdites sections de passages.

12. Collecteur à soupape selon l'une quelconque des revendications précédentes, dans lequel
(a) les axes de trois desdits alésages de montage de soupapes (132, 136, 144; 232, 238, 243) sont disposés sur un premier plan de référence parallèle auxdites sections frontales (121, 122; 221, 222); et
(b) les axes de deux desdits alésages de montage de soupapes (149, 153; 248, 253) sont disposés sur un second plan de référence parallèle auxdites sections frontales (121, 122; 221, 222) tout en étant espacés dudit premier plan de référence.

13. Collecteur à soupape selon la revendication 12, dans lequel lesdits deux alésages (149, 153; 248, 253) desdits alésages de montage de soupapes représentent des alésages de montage de soupapes de désaération.

14. Collecteur selon la revendication 8, dans lequel une extrémité externe de la tige de soupape de désaération (306, 306A) dudit assemblage de soupapes de désaération, éloignée de l'élément de fermeture de soupape (330), est configurée à des fins de mise en contact avec une clé ou avec un outil complémentaire analogue aisément amovible induisant un couple.

15. Collecteur selon l'une quelconque des revendications précédentes, dans lequel les centres desdits moyens d'orifices d'entrée de fluide de traitement (127, 128; 227, 228) et desdits moyens d'orifices de sortie de fluide de traitement (138, 140; 234, 240) sont situés dans un espace délimité par ledit prisme de référence.
